# EUROPÄISCHE PATENTSCHRIFT

(11) **EP 0 803 141 B1**
(45) Veröffentlichungstag und Bekanntmachung des Hinweises auf die Patenterteilung: **31.03.1999**
(21) Anmeldenummer: 96900256.7
(22) Anmeldetag: 05.01.1996
(51) Int. Cl.: H02B 13/02, H02B 13/035

(54) **ANORDNUNG VON KUPPLUNGSFELDERN IN GEKAPSELTEN MITTELSPANNUNGS-SCHALTANLAGEN**
ARRANGEMENT OF COUPLER BAYS IN SEALED MEDIUM VOLTAGE SWITCHING SYSTEMS
GROUPEMENT DE TRAVEES DE COUPLEURS DANS DES SYSTEMES DE COMMUTATION ENROBES, DE MOYENNE TENSION

(30) Priorität: 13.01.1995 DE 29501081 U
(43) Veröffentlichungstag der Anmeldung: 29.10.1997
(73) Patentinhaber: SIEMENS AKTIENGESELLSCHAFT, 80333 München (DE)
(72) Erfinder: MÜLLER, Hans-Joachim, D-61191 Rosbach (DE); POTH, Rainer, D-61118 Bad Vilbel (DE); MAHN, Gildo, D-63571 Gellnhausen (DE); SCHMITT, Peter, D-63069 Offenbach (DE)
(86) Internationale Anmeldenummer: DE9600015
(87) Internationale Veröffentlichungsnummer: WO9621961

(56) Entgegenhaltungen:
- EP-A- 0 002 398
- EP-A- 0 059 255
- EP-A- 0 564 057
- DE-U-29 501 081
- E&I ELEKTROTECHNIK UND MACHINENBAU, Bd. 110, Nr. 4, 1993, WIEN, Seiten 211-212, XP000359591 KURT HÖLLER ET AL.: "Neue Lasttrennschalter in SF6-Technologie"
- ABB REVIEW, Nr. 4, 1989, ZURICH, Seiten 17-24, XP000087937 ANDREAS PLESSL: "Type BE SF6 gas-insulated distribution switchgear"

## Beschreibung

Die Erfindung betrifft eine Anordnung von Kupplungsfeldern in gekapselten Mittelspannungs-Schaltanlagen mit gasgefüllten Behältern, in denen Vakuumschaltröhren als Leistungsschalter und Trennerkontakte als Dreistellungsschalter ausgeführt angeordnet sind.

Kupplungsfelder dieser Art können je nach Bedarf als Querkupplungsfeld für Doppel-Sammelschienensysteme oder als Längskupplungsfeld sowohl für Einfach-Sammelschienensysteme als auch für Doppel-Sammelschienensysteme eingesetzt werden. In der Schaltplandarstellung weisen beide Kupplungsfeldarten weitestgehende Übereinstimmung auf. Unterschiede bestehen im wesentlichen lediglich durch die unterschiedliche Einbindung der Kupplungsfelder in die verschiedenen Sammelschienensysteme.
So sind u. a. aus EP-A-0 564 057 Kupplungsfelder bekannt, bei denen die Dreistellungsschalter mit ihren Längsachsen im gasgefüllten Behälter parallel zur Frontseite derselben angeordnet sind, während sich die Vakuumschaltröhren oberhalb der Dreistellungsschalter befinden und zur Frontseite des Behälters im rechten Winkel liegen.
Weiterhin ist in ABB-Review, Nr. 4, 1989, Zürich, Seiten 17 bis 24 auch ein Kupplungsfeld dargestellt, bei dem sich die eine Vakuumschaltröhre unter dem Dreistellungsschalter befindet und der Dreistellungsschalter mit seiner Längsachse ebenfalls rechtwinklig zur Fronseite des Behälters angeordnet ist, so daß bei mehreren Polen mehrere Gasräume mit den entsprechenden Dreistellungsschaltern nebeneinander liegen.

Die der Erfindung zugrundeliegende Aufgabe besteht darin, ein Kupplungsfeld zu definieren, das in konstruktiver Hinsicht kompakt und mit geringem materiellen Aufwand die Anforderungen im Einsatzgebiet der Mittelspannungs-Schaltanlagen erfüllt.
Erfindugnsgemäß wird dies durch die Merkmale
1.1. die Dreistellungsschalter sind in dem gasgefüllten Behälter mit ihrer Längsachse annähernd rechtwinklig zur Frontseite desselben nebeneinander angeordnet,
1.2. die Vakuumschaltröhren sind in dem gasgefüllten Behälter mit ihrer Längsachse annähernd rechtwinklig zur Frontseite desselben nebeneinander und unterhalb der Dreistellungsschalter angeordnet, erreicht.

Mit den rechtwinklig zur Frontseite des Behälters angeordneten Längsachsen der Dreistellungsschalter, deren Trennerkontakte hintereinander und über den Vakuumschaltröhren angeordnet sind, ist ein sehr kompakter Aufbau der Kupplungsfelder erreicht, da sämtliche stromführenden Teile der Kupplungsfelder im gasgefüllten Behälter angeordnet sind. Auch innerhalb der Behälter selbst weisen die Kupplungsfelder ein minimalen Platzbedarf auf, so daß die gekapselten MittelspannungsSchaltanlagen insgesamt mit einem geringen Materialaufwand herstellbar sind.

Eine vorteilhafte Ausgestaltung der Erfindung sieht die Merkmale
2.1. die Kupplungsfelder sind jeweils als Querkupplungsfeld ausgeführt,
2.2. das Querkupplungsfeld ist mit einem außerhalb des gasgefüllten Behälters über untere Leitungsdurchführungen herausgeführten Leitungsabschnitt zur Aufnahme eines Stromwandlers versehen, vor.
Mit dieser Ausgestaltung des Querkupplungsfeldes ist der Anbau eines Stromwandlers außerhalb des gasgefüllten Behälters möglich, der jederzeit ohne Eingriff in das Innere des Behälters von außen her zugänglich ist.
Eine weitere vorteilhafte Ausgestaltung der Erfindung sieht das Merkmal
3.1. die Kupplungsfelder sind jeweils als Längskupplungsfeld ausgeführt, vor,
so daß die schaltungstechnische Ausgestaltung für beide Arten der Kupplungsfelder beibehalten ist.

Die Erfindung wird durch vier Figuren näher erläutert, wobei die Figuren 1 und 2 die Darstellung der jeweiligen Schaltpläne des Längskupplungsfeldes und des Querkupplungsfeldes zeigen, die Figur 3 eine konstruktive Ausgestaltung der Mittelspannungs-Schaltanlage eines Einfach-Sammelschienensystems mit einem Längskupplungsfeld und die Figur 4 eine konstruktive Ausgestaltung der MittelspannungsSchaltanlage eines Doppel-Sammelschienensystems mit einem Querkupplungsfeld darstellt.

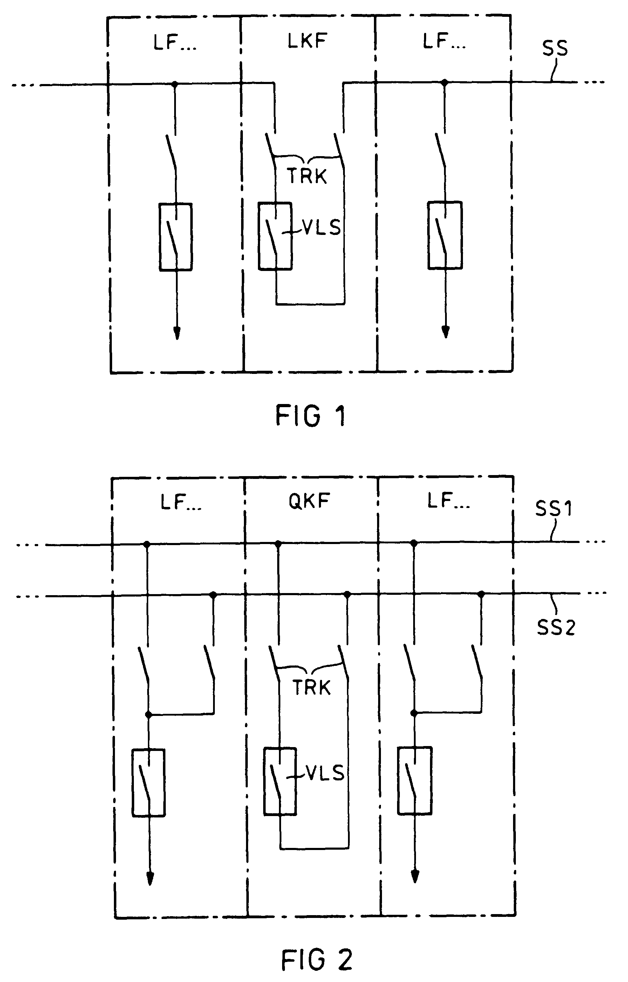

Die Figur 1 zeigt den Schaltplan des Längskupplungsfeldes LKF, das von den Leistungsschalterfeldern LF.. umgeben ist. Das Längskupplungsfeld LKF bewirkt in seiner Funktion lediglich die Unterbrechung der Sammelschiene SS für nachgeschaltete Leistungsschaltfelder LF.., um beispielsweise dort gefahrlos Montagearbeiten ausführen zu können. Wie die Leistungsschaltfelder LF.. enthält auch das Längskupplungsfeld LKF die Trennerkontakte TRK, die die Verbindung zu den einzelnen Abschnitten der Sammelschiene SS herstellen. Die Verbindung zwischen den Trennerkontakten TRK innerhalb des Längskupplungsfeldes LKF wird durch den Vakuumleistungsschalter VLS hergestellt.

Der Figur 2 ist das Querkupplungsfeld QKF zu entnehmen, das ebenfalls über seine Trennerkontakt TRK die Verbindung zu den jeweiligen Abschnitten der Sammelschienen - hier ist ein Doppel-Sammelschienensystem mit den Sammelschienen SS1, SS2 dargestellt - herstellt. Auch das Querkupplungsfeld QKF ist zwischen den einzelnen Leistungsschalterfeldern LF.. angeordnet.

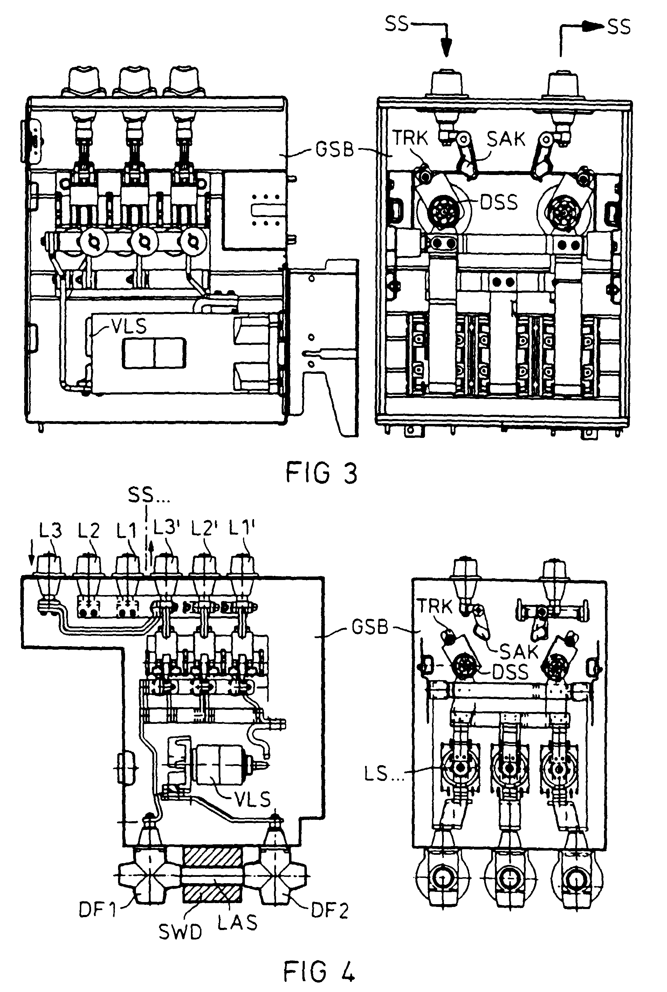

Die Figur 3 zeigt die konstrunktive Ausgestaltung der Mittelspannungs-Schaltanlage eines Einfach-Sammelschienensystems mit der Sammelschiene SS, die mit dem Sammelschienenanschlußkontakt SAK, dem Trennerkontakt TRK des Dreistellungsschalters DSS und der dazugehörigen Vakuumschaltröhre VLS die Durchschaltung zum nächsten Bereich der Sammelschiene SS als Längskupplungsfeld bewirkt. Weiterhin ist ersichtlich, daß die Trennerkontakte - dargestellt ist jeweils nur ein Trennerkontakt TRK - vom Dreistellungsschalter DSS oberhalb der jeweiligen Vakuumschaltröhren - bezeichnet ist nur eine Vakuumschaltröhre VLS - angeordnet sind. Der Seitenansicht der Mittelspannungs-Schaltanlage ist zu entnehmen, daß die Trennerkontakte innerhalb des Behälters GSB hintereinander angeordnet sind.

Die Abbildung 4 zeigt die Mittelspanungs-Schaltanlage mit einem Doppel-Schienensystem SS.., deren einzelne Leitungen L..., L'... über nicht bezeichnete Durchführungen in den Behälter GSB hereingeführt sind. Die Schaltungsanordnung selbst stellt ein Querkupplungsfeld dar, in dem in gleicher Weise wie beim Längskupplungsfeld LKF (Figur 3) über den Sammelschienenanschlußkontakt SAK, den Trennerkontakt TRK des Dreistellungsschalters DSS über die erste Leitungsdurchführung DF1 mit dem nachfolgenden Leitungsabschnitt LAS und der nachgeschalteten zweiten Leitungsdurchführung DF2 die Verbindung über die Vakuumschaltröhre VLS und dem entsprechenden Trennerkontakt des Dreistellungsschalters und dem entsprechenden Sammelschienenanschlußkontakt die elektrische Verbindung zur entsprechenden Leitung L'... hergestellt wird. In dem dargestellten Ausführungsbeispiel ist der Eingang der ersten Sammelschiene des Doppel-Sammelschienensystems mit dem Pfeil an der Durchführung für den Leiter 3 bezeichnet, der ausgangsseitig über die Durchführung zur Leitung L3' und dort zur zweiten Sammelschiene des Doppel-Sammelschienensystems geführt ist.
Mit dem Herausführen des Leitungsabschnitts LAS aus dem Behälter GSB ist erreicht, daß der Stromwandler SWD stets von außen her zugänglich ist.

## Patentansprüche

1. Anordnung von Kupplungsfeldern in gekapselten Mittelspannungs-Schaltanlagen mit gasgefüllten Behältern (GSB), in denen Vakuumschaltröhren (VLS) als Leistungsschalter und Trennerkontakte (TRK) als Dreistellungsschalter (DSS) ausgeführt angeordnet sind,
**gekennzeichnet durch** die Merkmale
1.1. die Dreistellungsschalter (DSS) sind in dem gasgefüllten Behälter (GSB) mit ihrer Längsachse annähernd rechtwinklig zur Frontseite desselben nebeneinander angeordnet,
1.2. die Vakuumschaltröhren (VLS) sind in dem gasgefüllten Behälter (GSB) mit ihrer Längsachse annähernd rechtwinklig zur Frontseite desselben nebeneinander und unterhalb der Dreistellungsschalter (DSS) angeordnet.

2. Anordnung von Kupplungsfeldern nach Anspruch 1,
**gekennzeichnet durch** die Merkmale
2.1. die Kupplungsfelder sind jeweils als Querkupplungsfeld (QKF) ausgeführt,
2.2. das Querkupplungsfeld (QKF) ist mit einem außerhalb des gasgefüllten Behälters (GSB) über untere Leitungsdurchführungen (DF..) herausgeführten Leitungsabschnitt (LAS) zur Aufnahme eines Stromwandlers (SWD) versehen.

3. Anordnung von Kupplungsfeldern nach Anspruch 1,
**gekennzeichnet durch** das Merkmal
3.1. die Kupplungsfelder sind jeweils als Längskupplungsfeld (LFK) ausgeführt.

## Claims

1. Arrangement of coupler panels in encapsulated medium-voltage switchgear with gas-filled containers (GSB), in which vacuum interrupters (VLS) are designed as circuit-breakers and isolating contacts (TRK) are designed as three-position disconnectors (DSS), characterised by the features
1.1 the three-position disconnectors (DSS) are arranged next to one another in the gas-filled container (GSB) with their longitudinal axis substantially at right angles to the front face thereof,
1.2 the vacuum interrupters (VLS) are arranged next to one another in the gas-filled container (GSB) with their longitudinal axis substantially at right angles to the front face thereof and beneath the three-position disconnectors (DSS).

2. Arrangement of coupler panels according to claim 1, characterised by the features
2.1 the coupler panels are each designed as a transverse coupler panel (QKF),
2.2 the transverse coupler panel (QKF) is provided with a line portion (LAS) guided outside the gas-filled container (GSB) via lower line bushings (DF..) for holding a current transformer (SWD).

3. Arrangement of coupler panels according to claim 1, characterised by the feature
3.1 the coupler panels are each designed as a longitudinal coupler panel (LFK).

## Revendications

1. Dispositif de travées de couplage dans des systèmes de commutation blindés à moyenne tension, comprenant des récipients (GBS) remplis de gaz, dans lesquels sont disposés des tubes (VLS) de commutation à vide conçus comme interrupteurs de puissance et des contacts (TRK) de coupure conçus comme commutateurs (DSS) à trois positions,
**caractérisé** par les caractéristiques suivantes :
1.1 les commutateurs (DSS) à trois positions sont disposés côte à côte dans le récipient (GBS) rempli de gaz en ayant leur axe longitudinal approximativement perpendiculaire au côté frontal de ce récipient,
1.2 les tubes (VLS) de commutation à vide sont disposés côte à côte dans le récipient (GBS) rempli de gaz en ayant leur axe longitudinal approximativement perpendiculaire au côté frontal de ce récipient, et en dessous des commutateurs (DSS) à trois positions.

2. Dispositif de travées de couplage suivant la revendication 1, **caractérisé** par les caractéristiques suivantes :
2.1 les travées de couplage sont réalisées chacune sous forme de travée (QKF) de couplage transversale,
2.2 la travée (QKF) de couplage transversale est équipée d'un tronçon (LAS) de ligne, sorti à l'extérieur du récipient (GBS) rempli de gaz par l'intermédiaire de traversées (DF..) inférieures de ligne, et destiné à recevoir un transformateur (SWD) de courant.

3. Dispositif de travées de couplage suivant la revendication 1. **caractérisé** par la caractéristique suivante :
3.1 les travées de couplage sont réalisées chacune sous forme de travée (LKF) de couplage longitudinale.
